# EUROPÄISCHE PATENTSCHRIFT

(11) **EP 3 824 373 B1**
(45) Veröffentlichungstag und Bekanntmachung des Hinweises auf die Patenterteilung: **08.03.2023**
(21) Anmeldenummer: 20764359.4
(22) Anmeldetag: 27.08.2020
(51) Int. Cl.: G06F 3/01, G06F 3/044, G06F 3/0362, G06F 3/0338, G01L 1/20

(54) **EINGABEGERÄT MIT TOUCHSCREEN ODER TOUCHPAD UND DARAUF BEFINDLICHEM EINGABETEIL MIT SCHNAPPHAPTIK**
INPUT DEVICE HAVING TOUCH SCREEN OR TOUCH PAD AND INPUT PART LOCATED THEREON WITH SNAP FEEL
DISPOSITIF D'ENTRÉE AYANT UN ÉCRAN TACTILE OU UN PAVÉ TACTILE ET UNE PARTIE D'ENTRÉE SITUÉE SUR CELUI-CI AVEC UNE SENSATION D'ENCLIQUETAGE

(30) Priorität: 07.10.2019 DE 102019126849
(43) Veröffentlichungstag der Anmeldung: 26.05.2021
(73) Patentinhaber: PREH GmbH, 97616 Bad Neustadt a.d. Saale (DE)
(72) Erfinder: BAUER, Norbert, 97616 Bad Neustadt (DE); KLEFFEL, Thomas, 97204 Höchberg (DE)
(74) Vertreter: Lohmanns, Bernard
(86) Internationale Anmeldenummer: PCT/EP2020/074003
(87) Internationale Veröffentlichungsnummer: WO 2021/069145

(56) Entgegenhaltungen:
- WO-A1-2018/150740
- DE-A1-102016 121 076
- DE-A1-102018 119 590

## Beschreibung

Die Erfindung betrifft ein Eingabegerät, insbesondere für ein Kraftfahrzeug, mit zumindest einer berührempfindlichen Eingabefläche, welche gegebenenfalls um eine durch eine Pixelmatrixanzeige ausgebildete Anzeigefläche ergänzt ist. Gattungsgemäß ist an dieser berührempfindlichen Eingabefläche ein Eingabeteil beweglich gelagert. Beispielsweise handelt es sich um einen Drehknopf, so dass das Eingabeteil als Drehsteller fungiert. Eine Kombination aus Pixelmatrixanzeige und Detektionseinrichtung zur Bereitstellung einer berührempfindlichen Eingabe- und Anzeigefläche wird geläufig auch als Touchscreen bezeichnet, während die anzeigelose Variante regelmäßig als Touchpad bezeichnet wird. Zur Detektion der Annäherung bzw. Berührung der Eingabefläche ist typischerweise eine kapazitive Detektionseinrichtung vorgesehen, die eine Elektrodenstruktur zur Erzeugung eines Arrays von Messkapazitäten aufweist, deren Beeinflussung durch Annäherung bzw. Berührung durch die Detektionseinrichtung ortsaufgelöst detektiert werden kann.

Eingabegräte dieser Art werden in Kraftfahrzeugen zur Steuerung von Fahrzeugkomponenten eingesetzt und dienen unter anderem zur Steuerung von Informations- oder Kommunikationseinrichtungen oder zur Klimasteuerung. Beispiele dafür sind ein Abspielgerät für Musikdateien, ein Navigationsgerät oder eine Bedienoberfläche zur Einstellung von Fahrzeugfunktionen.

Die Schaffung einer zusätzlichen Möglichkeit zur händischen Bedieneingabe durch Anordnung eines beweglich gelagerten Eingabeteils auf einem Touchscreen hat den Vorteil, dass sich der Bediener leichter ohne visuelle Überprüfung haptisch orientieren kann und die händische Bedieneingabe meist schneller und meist ganz ohne visuelle Überprüfung über das Eingabeteil vorgenommen werden kann im Vergleich zu einer Eingabe über die berührempfindliche Eingabefläche, beispielsweise durch eine Wischgeste. Die DE 10 2006 043 208 A1 offenbart einen auf einem Touchscreen angeordneten Drehsteller. Das Eingabeteil ist beispielsweise vorgesehen, ein Bedienmenü durchlaufen oder ein oder mehrere Menüpunkte auswählen zu können. Zur Detektion der Stellung des Eingabeteils wird auf die ohnehin vorhandene Detektionseinstellung zurückgegriffen, wobei ein sich mit dem Eingabeteil bei dessen Verstellung synchron mitbewegter Stellungsgeber mit der Detektionseinrichtung zusammenwirkt und beispielsweise eine Beeinflussung der Messkapazitäten bewirkt. Durch die ortsauflösende Detektion der kapazitiven Beeinflussung dieser Messfelder ist es somit möglich, nicht nur die Berührung der Eingabefläche sondern auch die Stellung des Eingabeteils zu detektieren, da das Eingabeteil mit einem die Messfelder stellungsabhängig beeinflussenden Stellungsgeber versehen ist.

Jedoch birgt die Detektion der Verstellung des Eingabeteils insbesondere dann Probleme, wenn das Eingabeteil einen zu detektieren Freiheitsgrad aufweist, bei dem dieses senkrecht zur Eingabefläche bewegt wird, also sich der Ort der Annäherung des Stellungsgebers bezüglich der berührempfindlichen Eingabefläche bei der händischen Verstellung, also beim Niederdrücken des Eingabeteils, allenfalls geringfügig ändert. Die Detektion einer sogenannten Push-Betätigung hat sich als besonders störanfällig erwiesen und konnte bisher kaum von einer zufälligen Annäherung, beispielsweise einer unbeabsichtigten Annäherung eines Fingers des Bedieners, an die Eingabefläche unterschieden werden. DE102018119590 A1 offenbart Bedienelement aufweisend einen Träger und ein in Richtung des Träger unter Einwirkung einer Betätigungskraft beweglich gelagertes Betätigungsteil mit einer einem Nutzer zugewandten berührungsempfindlichen Oberfläche. Das Betätigungsteil (10) ist aus einer Ruhestellung in eine Betätigungsstellung bewegbar und es weist auf seiner berührungsempfindlichen Oberfläche wenigstens zwei Betätigungsbereiche auf. Zwischen dem Betätigungsteil und dem Träger sind mehrere berührungslose Sensoren angeordnet, die dazu ausgebildet sind die Einwirkung einer Betätigungskraft zu erkennen.

WO 2018/150740 A1 offenbart ein druckempfindliches Eingabegerät.

Vor diesem Hintergrund bestand Bedarf nach einer Lösung für ein gattungsgemäßes Eingabegerät mit berührempfindlicher Eingabefläche und zusätzlich darauf angeordnetem Eingabeteil, welches in der Lage ist, die Verstellung des Eingabeteils in einer zur Eingabefläche senkrechten Richtung zuverlässiger zu detektieren und welches insbesondere bauraumsparend und/oder kostengünstig realisiert werden kann. Diese Aufgabe wird durch ein Eingabegerät gemäß Anspruch 1 gelöst. Eine gleichermaßen vorteilhafte Verwendung sowie ein Verfahren zum Betrieb eines entsprechenden Eingabegeräts sind jeweils Gegenstand nebengeordneter Ansprüche. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Eingabegerät. Das Eingabegerät dient dazu, ein oder mehrere Steuer- und Schaltvorgänge durch händische Betätigung eines Bedieners vorzunehmen. Erfindungsgemäß weist das Eingabegerät eine dem Bediener zugewandte, berührempfindliche Eingabefläche auf. Diese kann eben, d.h. zweidimensional, oder auch dreidimensional, d.h. mit einer oder mehreren Erhebungen oder Vertiefungen und somit eine haptische Landschaft ausbildend ausgestaltet sein. Erfindungsgemäß ist eine Detektionseinrichtung vorgesehen, um eine Annäherung und Berührung der berührempfindlichen Eingabefläche beispielsweise durch ein Bedienorgan, wie einen Finger eines Bedieners ortsaufgelöst zu detektieren. Erfindungsgemäß weist die Detektionseinrichtung wenigstens ein sich parallel zur Eingabefläche erstreckendes Sensorarray zur kapazitiven und/oder induktiven, Detektion einer Annäherung bzw. Berührung auf. Beispielsweise ist ein Array aus mehreren, eine Anordnung von Messkapazitäten erzeugenden Elektroden oder ein Array von Induktionsspulen vorgesehen. Bevorzugt ist ein Array aus Elektroden zur projiziert kapazitiven Berühr- beziehungsweise Annäherungsdetektion vorgesehen.

Erfindungsgemäß ist ein auf der Eingabefläche angeordnetes, entlang einer senkrecht zur Eingabefläche verlaufenden Betätigungsrichtung aus einer Ruhestellung in eine Betätigungsstellung beweglich gelagertes Eingabeteil vorgesehen, um eine Vornahme einer Bedieneingabe durch den Bediener durch händische Verlagerung des Eingabeteils entlang der Betätigungsrichtung zu ermöglichen. Beispielsweise ist das Eingabeteil beweglich an einem Fuß gelagert, der seinerseits lösbar, bevorzugt lösbar und reversibel festlegbar, an der Eingabefläche fixiert ist. Neben dem erfindungsgemäß zwingenden und zur Eingabefläche senkrechten Freiheitsgrad, d.h. neben der Push-Funktion des Eingabeteils, können weitere Freiheitsgrade vorgesehen sein, beispielsweise ist das Eingabeteil ferner um eine zur Eingabefläche senkrechte Drehachse verdrehbar und/oder relativ zur Eingabefläche verschwenkbar gelagert, um weitere Steuer- beziehungsweise Schaltfunktionen mittels Verstellung des Eingabeteils zu ermöglichen. Meist bevorzugt ist wenigstens neben der zur Eingabefläche senkrechten Beweglichkeit wenigstens eine Drehverstellung des Eingabeteils um eine zur Eingabefläche senkrechte Drehachse ermöglicht.

Erfindungsgemäß weist das Eingabegerät einen mit der Detektionseinrichtung zusammenwirkenden und am Eingabeteil festgelegten Stellungsgeber zur berührungslosen Stellungsdetektion auf. Der Begriff Stellungsgeber ist weit auszulegen. Beispielsweise ist eine Elektrode aus metallischem Material als Stellungsgeber vorgesehen, die sich synchron mit dem Eingabeteil bewegt. Der Stellungsgeber ist beispielsweise so angeordnet, dass er bei Berührung des Eingabeteils durch den Bediener an den zur Berührung vorgesehenen Flächen elektrisch isoliert zum Bediener angeordnet ist oder in elektrisch leitendem Kontakt mit dem Bediener steht. In einer anderen Ausgestaltung ist der Stellungsgeber als elektrischer Schwingkreis ausgebildet, dessen Abstimmung mit der Verstellung des Eingabeteils variiert.

Erfindungsgemäß sind die Rückstellmittel ausgebildet, eine der händischen Verstellung aus der Ruhestellung entgegenwirkende Rückstellkraft mit Schnapphaptik zu erzeugen. Anders ausgedrückt ist das Eingabeteil monostabil in der Ruhestellung gelagert. Unter Schnapphaptik wird ein Kraft-Weg-Verlauf mit Druckpunkt verstanden, dass also die der Betätigung entgegenwirkende und vom Bediener zu überwindende Rückstellkraft mit zunehmender Bewegung des Eingabeteils aus der Ruhestellung in die Betätigungsstellung, auch als betätigte Stellung bezeichnet, erst zu nimmt, dann ein erstes lokales Maximum, den sogenannten Druckpunkt, vor Erreichen der Betätigungsstellung erreicht, um daraufhin abzufallen, ohne auf Null zu gehen. Ferner ist vorgesehen, dass dann vor Erreichen der Betätigungsstellung oder spätestens mit Erreichen der betätigten Stellung die Rückstellkraft wieder zunimmt, da die Bewegung des Eingabeteils beanschlagt ist.

Bevorzugt ist bei der Bewegung des Eingabeteils aus der betätigten Stellung zurück in der Ruhestellung ebenfalls eine Schnapphaptik wahrnehmbar, bei der die die Rückstellung bewirkende Rückstellkraft mit zunehmender Bewegung des Eingabeteils aus der betätigten Stellung in Richtung Ruhestellung erst zu nimmt, dann ein zweites lokales Maximum vor Erreichen der Ruhestellung erreicht, um daraufhin abzufallen. Bevorzugt zeigt sich dabei ein Hystereseverhalten, das heißt, die Auslenkung des Eingabeteils, bei der das lokale erste Maximum der Rückstellkraft erreicht ist, ist nicht identisch mit der Auslenkung des Eingabeteils, bei der das zweite lokale Maximum der Rückstellkraft erreicht ist. Bevorzugt ist die bezüglich der Ruhestellung bestimmte Auslenkung beim ersten lokalen Maximum größer als die Auslenkung beim zweiten lokalen Maximum.

Erfindungsgemäß ist die Detektionseinrichtung ausgelegt, einen zeitlichen Verlauf einer Annäherung, beispielsweise des Fingers eines Bedieners oder beispielsweise des Stellungsgebers, an die berührempfindliche Eingabefläche mittels eines zeitlichen Verlaufs eines Sensorsignals des Sensorarrays zu erfassen und den zeitlichen Verlauf des Sensorsignals und/oder ein zugehöriges Frequenzspektrum zu analysieren. Erfindungsgemäß ist sie ferner ausgelegt, ausschließlich dann eine Schalt- oder Steuerfunktion zuzuordnen, wenn bei der vorhergehenden Analyse festgestellt wurde, dass der zuvor gemessene zeitliche Verlauf des Sensorsignals und/oder das aus dem zuvor gemessenen, zeitlichen Verlauf bestimmte, beispielsweise durch Fourieranalyse gewonnene, Frequenzspektrum eine durch die Schnapphaptik vorgegebene Charakteristik aufweist.

Die erfindungsgemäße Berücksichtigung des zeitlichen Signal- und damit des Annäherungsverlaufs anhand eines Detektionssignals in Kombination mit der die Schnapphaptik beinhaltenden Rückstellung hat den Vorteil, dass die durch die Schnapphaptik der Bewegung des Eingabeteils aufgeprägte Charakteristik leicht im zeitlichen Verlauf des Detektionsverlaufs erkennbar ist und somit eine ungewollte sonstige Annäherung leicht von einer Annäherung unterschieden werden kann, die intendiert ist und sich aus der Betätigung des Eingabeteils und der damit verbundenen Annäherung des Stellungsgebers an die berührempfindliche Eingabefläche ergibt. Letztere kann somit zuverlässiger detektiert werden. Anders ausgedrückt, die Schnapphaptik hat nicht nur den Vorteil der haptischen Rückmeldung, sondern erzwingt bei der Betätigung ein Bewegungsprofil des Eingabeteils, welches in charakteristischem Zusammenhang mit der Schnapphaptik steht und somit leicht als intendierte Betätigung des Eingabeteils im zeitlichen Verlauf des Sensorsignals identifiziert werden kann, da erfindungsgemäß ebendieser Grundlage der weiteren Analyse der Detektionseinrichtung ist.

Gemäß einer bevorzugten Ausgestaltung ist vorgesehen, dass ein zeitlicher Verlauf des Sensorsignals als zwingende Voraussetzung für die weitere Analyse nur dann als für die Zuordnung einer Steuer- oder Steuerfunktion geeignete Annäherung qualifiziert wird, wenn ein vorgegebener Grenzwert von dem Detektionssignal über- bzw. unterschritten wird. Beispielsweise ist der Grenzwert durch das Detektionssignal bestimmt, das sich ergibt, wenn sich das Eingabeteil in einer der Betätigungsstellung vorgelagerten Stellung, beispielsweise bei halber Auslenkung zwischen Ruhestellung und Betätigungsstellung, oder noch bevorzugter in einer Stellung befindet, bei der die Rückstellkraft das erste lokale Maximum annimmt, nämlich sich am Druckpunkt befindet, um so die weitere Analyse und Fehlauslösung bei nicht intendierter Betätigung bzw. Berührung zu unterbinden.

Bevorzugt wird der zeitliche Verlauf vor der Analyse hochpassgefiltert, um so vergleichsweise langsame Annäherungen von Körperteilen an die berührempfindliche Eingabefläche, welche unter fehlender Betätigung des Eingabeteils erfolgen oder welche bei Betätigungen bis zum Druckpunkt erfolgen, besser bei der weiteren Analyse disqualifizieren zu können und somit keine Schalt- und Steuerfunktion zuzuordnen.

Bevorzugt ist die Grenzfrequenz der Hochpassfilterung durch den zeitlichen Abstand definiert, der zwischen dem ersten Erreichen einer durch ein lokales Maximum der Rückstellkraft definierten ersten Auslenkung (Druckpunkt) während einer händischen Verstellung des Eingabeteils aus der Ruhestellung entlang der Betätigungsrichtung in Richtung Betätigungsstellung und dem nachfolgenden wiederholten Erreichen eines dem lokalen Maximums entsprechenden Wertes der Rückstellkraft noch vor dem Erreichen der Betätigungsstellung bei einer zweiten Auslenkung verstrichen ist.

Die Erfindung betrifft ferner eine Verwendung des zuvor beschriebenen Eingabegeräts in einem Kraftfahrzeug.

Die Erfindung betrifft ferner ein Betrieb eines Eingabegeräts mit den folgenden Schritten. In einem Bereitstellungsschritt wird ein Eingabegerät in einer der zuvor beschriebenen Ausgestaltungen bereitgestellt. In einem Erfassungsschritt erfolgt ein Erfassen eines zeitlichen Verlaufs einer Annäherung, beispielsweise des Stellungsgebers oder eines Fingers des Bedieners, an die berührempfindliche Eingabefläche mittels eines Sensorsignals des zur Detektionseinrichtung gehörigen Sensorarrays. In einem nachfolgenden Analyseschritt erfolgt die Analyse des zeitlichen Verlaufs und/oder eines zugehörigen Frequenzspektrums. In einem nachfolgenden Zuordnungsschritt erfolgt das Zuordnen einer Schalt- oder Steuerfunktion ausschließlich, sofern in dem Analyseschritt festgestellt wurde, dass der zeitliche Verlauf und/oder das zugehörige Frequenzspektrum eine durch die Schnapphaptik vorgegebene Charakteristik aufweist, um so zuverlässiger die Annäherung des Stellungsgebers an die berührempfindliche Eingabefläche der Schalt- oder Steuerfunktion zuzuordnen.

Die erfindungsgemäße Berücksichtigung des zeitlichen Annäherungsverlaufs anhand eines Detektionssignals in Kombination mit der die Schnapphaptik beinhaltenden Rückstellung hat den Vorteil, dass das durch die Schnapphaptik der Bewegung des Eingabeteils aufgeprägte Charakteristik leicht im zeitlichen Verlauf des Detektionsverlaufs erkennbar ist und somit eine ungewollte sonstige Annäherung leicht von einer Annäherung unterschieden werden kann, die sich aus der Betätigung des Eingabeteils und der damit verbundenen Annäherung des Stellungsgebers and die berührempfindliche Eingabefläche ergibt. Anders ausgedrückt, die Schnapphaptik hat nicht nur den Vorteil der haptischen Rückmeldung sondern erzwingt bei der Betätigung ein Bewegungsprofil des Eingabeteils, welches in charakteristischem Zusammenhang mit der Schnapphaptik steht und somit leicht als intendierte Betätigung des Eingabeteils identifiziert werden kann, da erfindungsgemäß der zeitliche Verlauf des Detektionssignals Grundlage der weiteren Analyse der Detektionseinrichtung ist.

Gemäß einer bevorzugten Ausgestaltung des Betriebsverfahrens ist vorgesehen, dass ein zeitlicher Verlauf des Sensorsignals als zwingende Voraussetzung für die weitere Analyse nur dann als Annäherung qualifiziert wird, wenn ein vorgegebener Grenzwert von dem Detektionssignal über- bzw. unterschritten wird. Beispielsweise ist der Grenzwert durch das Detektionssignal bestimmt, das sich ergibt, wenn sich das Eingabeteil in einer der Betätigungsstellung vorgelagerten Stellung, beispielsweise bei halber Auslenkung, oder in einer Stellung befindet, bei der die Rückstellkraft das lokale Maximum annimmt, um so die weitere Analyse und Fehlauslösung bei nicht intendierter Betätigung bzw. Berührung zu unterbinden.

Bevorzugt wird der zeitliche Verlauf vor der Analyse hochpassgefiltert, um so vergleichsweise langsame Annäherungen von Körperteilen an die berührempfindliche Eingabefläche, welche unter fehlender Betätigung des Eingabeteils erfolgen, besser bei der weiteren Analyse disqualifizieren zu können und somit keine Schalt- und Steuerfunktion zuzuordnen.

Bevorzugt ist die Grenzfrequenz der Hochpassfilterung durch den zeitlichen Abstand definiert, der zwischen dem ersten Erreichen einer durch ein lokales Maximum der Rückstellkraft definierten ersten Auslenkung (Druckpunkt) während einer händischen Verstellung des Eingabeteils aus der Ruhestellung entlang der Betätigungsrichtung in Richtung Betätigungsstellung und dem nachfolgenden wiederholten Erreichen eines dem lokalen Maximums entsprechenden Wertes der Rückstellkraft noch vor dem Erreichen der Betätigungsstellung bei einer zweiten Auslenkung verstrichen ist. Beispielsweise ist die Grenzfrequenz wie folgt bestimmt: f_{gr}=1/ Δt mit einer Schnappzeit Δt im Bereich von 2 Millisekunden bis 10 Millisekunden.

Die Erfindung wird anhand der nachfolgenden Figuren näher erläutert. Die Figuren sind dabei nur beispielhaft zu verstehen und stellen jeweils lediglich eine bevorzugte Ausführungsvariante dar. Es zeigen:
- Fig. 1: eine perspektivische Ansicht einer Ausführungsform des erfindungsgemäßen Eingabegeräts 1;
- Fig. 2: ein Verlauf der Rückstellkraft F(S);
- Fig. 3: ein Verlauf des Sensorsignals Z(t).

Das erfindungsgemäße Eingabegerät 1 ist zur Verwendung in einem nicht dargestellten Kraftfahrzeug vorgesehen und beispielsweise in einer zum Fahrzeug gehörenden Mittelkonsole oder einem Armaturenbrett angeordnet und dient der Vornahme von Bedieneingaben durch einen Bediener B. Dazu sind ist ein drehbeweglich gelagertes Eingabeteil 9 sowie eine berührempfindliche Eingabefläche 8 vorgesehen. Während die berührempfindliche Eingabefläche 8 der Vornahme einer herkömmlichen Eingabe unter Berührung, wie einer Wischgeste und Dergleichen, dient, ermöglicht das Eingabeteil 9 eine Bedieneingabe durch den Bediener B durch Verstellen des Eingabeteils entlang einer ersten Betätigungsrichtung B₁ und einer zweiten Betätigungsrichtung B₂.

Das Eingabeteil 9 ist einerseits drehbeweglich auf der Eingabefläche 8 um eine zur berührempfindlichen Eingabefläche 8 orthogonalen Drehachse D gelagert, um so die Vornahme einer Dreheingabe durch den Bediener 8 entlang der zweiten Betätigungsrichtung B₂ zu ermöglichen. Das Eingabeteil 9 ist ferner translatorisch entlang einer zur Eingabefläche 8 senkrechten und zur Drehachse D parallelen, ersten Betätigungsrichtung B1 aus einer Ruhestellung in eine Betätigungsstellung verlagerbar, wodurch sich eine Push-Funktionalität des Eingabeteils 9 und damit des Eingabegeräts 1 ergibt. Dabei stellt die Betätigungsstellung diejenige Stellung des Eingabeteils 9 mit größter Annäherung an die Eingabefläche 8 dar und die Ruhestellung diejenige Stellung des Eingabeteils 9 mit größtem Abstand zur Eingabefläche 8. Als Auslenkung wird die Lageänderung des Eingabeteils gegenüber der Ruhestellung verstanden.

Da das Eingabeteil 9 leicht haptisch wahrnehmbar ist, ermöglicht es das erleichterte Wiederfinden und hilft bei der Orientierung auf der berührempfindlichen Eingabefläche 8. Es ist eine ein Elektrodenarray 6 aufweisende Detektionseinrichtung 4, 6 zur ortsaufgelösten und kapazitiven Detektion einer Berührung auf der Eingabefläche 8 und Annäherung an der Eingabefläche 8 ausgebildet, mittels derer die Berührung bzw. Annäherung kapazitiv durch lokale Beeinflussung eines Arrays von Messkapazitäten detektiert wird, welche durch das Elektrodenarray 6 erzeugt wird. Das Elektrodenarray 6 wird durch eine zur Berührdetektionseinrichtung 4, 6 gehörige Beschichtung erzeugt, die eine regelmäßigen Struktur ausbildet und sich parallel zur Eingabefläche 8 erstreckt. Das Elektrodenarray 6 ist aus in Spalten und Reihen organisierten, transparenten Elektroden ausgebildet. Die Beaufschlagung der Elektrodenstruktur 6 mit den Messkapazitäten sowie die Detektion deren Beeinflussung sowie die Ermittlung einer Annäherung bzw. Berührung mit zugehörigem Berührort erfolgt durch eine zur Detektionseinrichtung 4, 6 gehörige Auswerteinheit 4, die außerhalb des Schichtaufbaus 2 angeordnet ist.

Das Elektrodenarray 6 ist auf der dem Bediener B abgewandten Seite einer transparenten, äußeren Schicht 7 des Schichtaufbaus 2, wobei die äußere Schicht aus einem Glaswerkstoff oder transparentem Kunststoff ausgebildet ist, während die dem Bediener B zugewandte Seite der transparenten, äußeren Schicht 7 des Schichtaufbaus 2 die berührempfindliche Eingabefläche 8 definiert. Zwischen der transparenten, äußeren Schicht 7 und einer Pixelmatrixanzeige 3 ist eine Klebstoffschicht 5 aus einem UV-härtenden, transparent aushärtendem Klebstoff vorgesehen. Die sich daraus ergebende Kombination und überlagerte Anordnung von berührempfindlicher Eingabefläche 8 mit Pixelmatrixanzeige 3 qualifiziert diese als Touchscreen. Die Detektion einer Verstellung oder der Stellung des Eingabeteils 9 erfolgt durch die Detektionseinrichtung 4, 6, in dem diese mit einem Stellungsgeber 10 zusammenwirkt, der am Eingabeteil 9 befestigt ist und sich somit synchron mit diesem bei einer durch den Bediener B vorgenommenen, händischen Verstellung mitbewegt und die von der Elektrodenstruktur 6 erzeugten Messkapazitäten stellungsabhängig beeinflusst. Die gezeigte Ausgestaltung der Stellungsgebers 10 ist lediglich synthetisch zu verstehen. Es kann sich eine von der Darstellung der Figur andere Anordnung und Ausgestaltung des Stellungsgebers 10 ergeben. Beispielsweise ist eine bezüglich der Drehachse D des Eingabeteils 9 exzentrische Positionierung als auch eine Positionierung auf der Drehachse D möglich. Das Elektrodenarray 6 ist mit der außerhalb des Schichtaufbaus 2 befindlichen Auswerteinheit 4 elektrisch leitend verbunden. Es sind lediglich schematisch angedeutete Rückstellmittel 11 vorgesehen, die eine Rückstellkraft erzeugt, die der Verstellung des Eingabeteils 9 bei der händischen Verstellung aus der Ruhestellung in die Betätigungsstellung entlang der ersten Betätigungsrichtung B₁ entgegenwirkt und dabei eine Schnapphaptik erzeugt. Bei der durch die händische Betätigung bewirkten Annäherung des Stellungsgebers 10 an die durch das Elektrodenarray erzeugten Messkapazitäten kommt es zu einer zeitlichen Veränderung eines Sensorsignals, dessen zeitlicher Verlauf Grundlage einer Analyse durch die Auswerteinheit 4 ist.

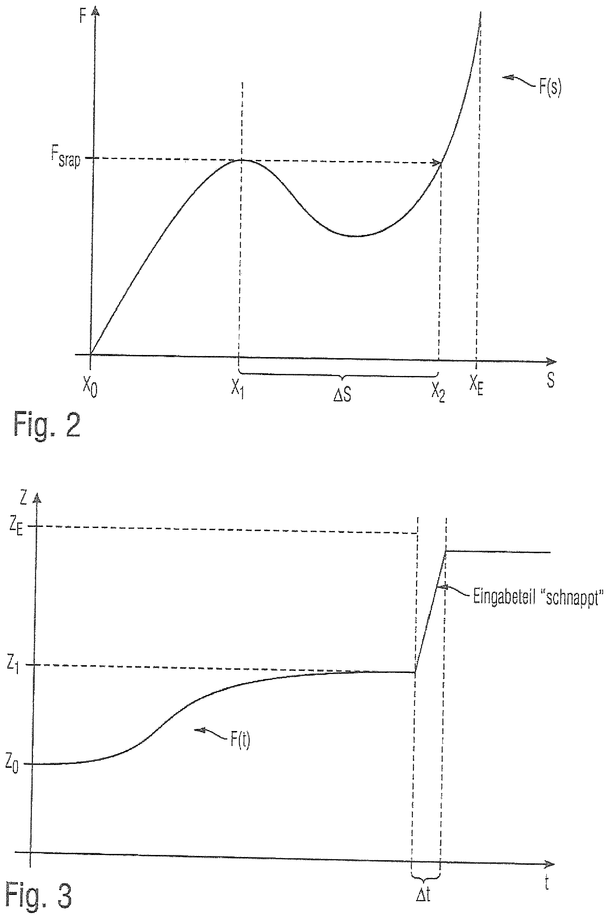

Anhand von Figur 2 wird die Schnapphaptik näher erläutert. Diese zeigt den Verlauf der Rückstellkraft F(S) in Abhängigkeit der Auslenkung S des Eingabeteils aus der Ruhestellung, die mit X₀ bezeichnet ist. Die durch die Endbeanschlagung des Eingabeteils sich ergebende Betätigungsstellung ist mit X_{E} bezeichnet. Wie sich aus dem Verlauf der Rückstellkraft F ergibt, liegt ein lokales Maximum der Rückstellkraft Fₛₙₐₚ bei der Auslenkung X₁ vor, dem sogenannten "Druckpunkt". Danach fällt die Rückstellkraft über die Schnappauslenkung ΔS zuerst ab, um nachfolgend wieder exponentiell anzusteigen. Die Schnappauslenkung ΔS ist durch den Abstand zwischen der Auslenkung X₁ mit dem lokalen Maximum Fₛₙₐₚ und der Auslenkung X₁ beim Wiedererreichen dieses Rückstellkraftwertes Fₛₙₐₚ unmittelbar vor Erreichen der Betätigungsstellung X_{E} als Endstellung definiert. Das für die Zurücklegung der Schnappauslenkung ΔS benötigte Zeitintervall, die sogenannte Schnappzeit, Δt ist im Wesentlichen durch die Schnapphaptik und nicht oder allenfalls geringfügig durch die Betätigungsgeschwindigkeit bestimmt, mit der der Bediener die Eingabe vornimmt und ist daher eine von der Schnapphaptik bestimmte charakteristische Größe. Bevorzugt liegt die Schnappzeit im Bereich von 2 Millisekunden bis 10 Millisekunden. Anhand der Figur 3 wird der Verlauf des Sensorsignals Z(t) in Abhängigkeit der Zeit erläutert. Es zeigt sich, dass die der Betätigung vorhergehende Erstberührung des Eingabeteils in dessen Ruhestellung durch den Bediener einen ersten Signalwert Z₀ im zeitlichen Sensorsignalverlauf Z(t) hervorruft. Das Sensorsignal Z(t) nimmt zu und erreicht mit Einnahme des lokalen Maximums Fₛₙₐₚ der Rückstellkraft F zur Auslenkung X₁ den Wert Z₁. Dann bewirkt die Schnapphaptik einen rapiden Anstieg des Sensorsignals Z(t) auf den Signalwert Z_{E} über die Schnappzeit Δt, wobei schließlich die Betätigungsstellung X_{E} durch das Eingabeteil erreicht wird.

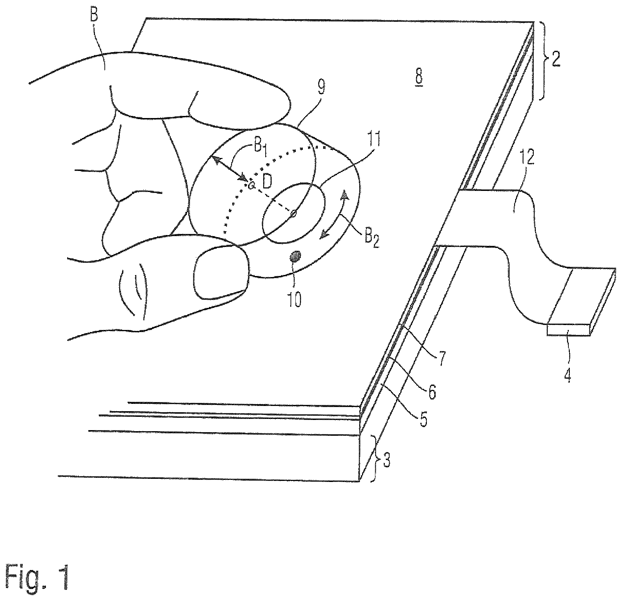

Bei der weiteren Auswertung und Analyse durch die in Figur 1 gezeigte Auswerteinheit 4 ist daher ein Überschreiten des Grenzwertes Z₁ eine zwingende Voraussetzung für eine Zuordnung einer Schalt- oder Steuerfunktion. Wird dieser Grenzwert nicht überschritten, erfolgt keine Zuordnung durch die Auswerteinheit 4. Darüber hinaus kommt ein Hochpass-Frequenzfilter zum Einsatz. Die Grenzfrequenz dieses Filters wird entsprechend der Schnappzeit gewählt: f_{gr}=1/ Δt, wobei die Schnappzeit Δt im Bereich von 2 Millisekunden bis 10 Millisekunden liegt.

## Patentansprüche

1. Eingabegerät (1) aufweisend:
eine einem Bediener (B) zugewandte berührempfindliche Eingabefläche (8);
eine Detektionseinrichtung (4, 6) zur ortsaufgelösten Detektion einer Annäherung und Berührung der berührempfindlichen Eingabefläche (8), welche ein sich parallel zur Eingabefläche (8) erstreckendes Sensorarray (6) zur kapazitiven und/oder induktiven Detektion aufweist;
ein auf der Eingabefläche (8) angeordnetes, entlang einer senkrecht zur Eingabefläche (8) verlaufenden Betätigungsrichtung (B₁) aus einer Ruhestellung (X₀) in eine Betätigungsstellung (X_{E}) beweglich gelagertes Eingabeteil (9), um eine Vornahme einer Bedieneingabe durch den Bediener (B) durch händische Verlagerung des Eingabeteils (9) entlang der Betätigungsrichtung (B₁) zu ermöglichen;
ein am Eingabeteil (9) festgelegter, mit der Detektionseinrichtung (4, 6) zusammenwirkender Stellungsgeber (10) zur berührungslosen Stellungsdetektion;
**dadurch gekennzeichnet, dass** das Eingabegerät ferner aufweisend ist:
Rückstellmittel (11), um eine der händischen Verlagerung aus der Ruhestellung (X₀) entgegenwirkende Rückstellkraft (F) mit Schnapphaptik zu erzeugen, bei der die der Betätigung entgegenwirkende und vom Bediener (B) zu überwindende Rückstellkraft (F) mit zunehmender Verlagerung des Eingabeteils (9) aus der Ruhestellung (X₀) in die Betätigungsstellung (X_{E}) erst zu nimmt, dann ein erstes lokales Maximum (Fₛₙₐₚ) als Druckpunkt vor Erreichen der Betätigungsstellung (X_{E}) erreicht, um daraufhin abzufallen, ohne auf Null zu gehen und um dann spätestens mit Erreichen der Betätigungsstellung (X_{E}) wieder zuzunehmen;
wobei die Detektionseinrichtung (4, 6) ausgelegt ist, einen zeitlichen Verlauf einer Annäherung an die berührempfindliche Eingabefläche (8) mittels eines zeitlichen Verlaufs eines Sensorsignals (Z(t)) des Sensorarrays (6) zu erfassen und den zeitlichen Verlauf des Sensorsignals (Z(t)) und/oder ein zugehöriges Frequenzspektrum zu analysieren und sie ferner ausgelegt ist, ausschließlich dann eine Schalt- oder Steuerfunktion zuzuordnen, wenn bei der vorhergehenden Analyse festgestellt wurde, dass der zeitliche Verlauf des Sensorsignals (Z(t)) und/oder das zugehörige Frequenzspektrum eine durch die Schnapphaptik vorgegebene Charakteristik aufweist.

2. Eingabegerät (1) gemäß Anspruch 1, wobei der zeitliche Verlauf des Sensorsignals (Z(t)) vor der Analyse hochpassgefiltert wird.

3. Eingabegerät (1) gemäß dem vorhergehenden Anspruch, wobei eine Grenzfrequenz (f_{gr}) der Hochpassfilterung durch den zeitlichen Abstand zwischen dem ersten Erreichen einer durch das lokale Maximum (Fₛₙₐₚ) der Rückstellkraft (F) definierten ersten Auslenkung (X₁) bei der händischen Verlagerung des Eingabeteils (9) aus der Ruhestellung (X₀) entlang der Betätigungsrichtung (B₁) und dem nachfolgenden wiederholten Erreichen eines dem lokalen Maximums (Fₛₙₐₚ) entsprechenden Wertes der Rückstellkraft (F) noch vor dem Erreichen der Betätigungsstellung (X_{E}) bei einer zweiten Auslenkung (X₂) definiert ist.

4. Eingabegerät (1) gemäß einem der vorhergehenden Ansprüche, wobei ein zeitlicher Verlauf des Sensorsignals (Z(t)) als zwingende Voraussetzung für die weitere Analyse sich ausschließlich für die Zuordnung einer Schalt- oder Steuerfunktion qualifiziert, wenn ein vorgegebener Grenzwert (Z₁) von dem Sensorsignal (Z(t)) über- bzw. unterschritten wurde.

5. Verwendung des Eingabegeräts (1) gemäß einem der vorhergehenden Ansprüche in einem Kraftfahrzeug.

6. Betrieb eines Eingabegeräts mit den folgenden Schritten:
Bereitstellen eines Eingabegeräts (1) aufweisend:
• eine einem Bediener (B) zugewandte berührempfindliche Eingabefläche (8);
• eine Detektionseinrichtung (4, 6) zur ortsaufgelösten Detektion einer Annäherung und Berührung der berührempfindlichen Eingabefläche (8), welche ein sich parallel zur Eingabefläche (8) erstreckendes Sensorarray (6) zur kapazitiven und/oder induktiven, Detektion aufweist,
• ein auf der Eingabefläche (8) angeordnetes, entlang einer senkrecht zur Eingabefläche (8) verlaufenden Betätigungsrichtung (B₁) aus einer Ruhestellung (X₀) in eine Betätigungsstellung (X_{E}) beweglich gelagertes Eingabeteil (9), um eine Vornahme einer Bedieneingabe durch den Bediener (B) durch händische Verlagerung des Eingabeteils (9) entlang der Betätigungsrichtung (B₁) zu ermöglichen;
• ein am Eingabeteil (9) festgelegter mit der Detektionseinrichtung zusammenwirkenden Stellungsgeber (10) zur berührungslosen Stellungsdetektion;
• Rückstellmittel (11), um eine der händischen Verlagerung aus der Ruhestellung (X₀) entgegenwirkende Rückstellkraft (F) mit Schnapphaptik zu erzeugen, bei der die der Betätigung entgegenwirkende und vom Bediener (B) zu überwindende Rückstellkraft (F) mit zunehmender Verlagerung des Eingabeteils (9) aus der Ruhestellung (X₀) in die Betätigungsstellung (X_{E}) erst zu nimmt, dann ein erstes lokales Maximum (Fₛₙₐₚ) als Druckpunkt vor Erreichen der Betätigungsstellung (X_{E}) erreicht, um daraufhin abzufallen, ohne auf Null zu gehen und um dann spätestens mit Erreichen der Betätigungsstellung (X_{E}) wieder zuzunehmen;
Erfassen eines zeitlichen Verlaufs einer Annäherung an die berührempfindliche Eingabefläche (8) mittels eines zeitlichen Verlaufs eines Sensorsignals (Z(t)) des Sensorarrays (6);
Analyse des zeitlichen Verlaufs des Sensorsignals (Z(t)) und/oder eines zugehörigen Frequenzspektrums;
Ausschließliches Zuordnen einer Schalt- oder Steuerfunktion sofern in dem Analyseschritt festgestellt wurde, dass der zeitliche Verlauf des Sensorsignals (Z(t)) und/oder das zugehörige Frequenzspektrum eine durch die Schnapphaptik vorgegebene Charakteristik aufweist.

7. Betrieb des Eingabegeräts gemäß dem vorhergehenden Anspruch, wobei der zeitliche Verlauf des Sensorsignals (Z(t)) vor der Analyse hochpassgefiltert wird.

8. Betrieb des Eingabegeräts gemäß dem vorhergehenden Anspruch, wobei eine Grenzfrequenz (f_{gr}) der Hochpassfilterung durch den zeitlichen Abstand zwischen dem ersten Erreichen einer durch das lokale Maximum (Fₛₙₐₚ) der Rückstellkraft (F) definierten ersten Auslenkung (X₁) bei einer händischen Verlagerung des Eingabeteils (9) aus der Ruhestellung (X₀) entlang der Betätigungsrichtung (B₁) und dem nachfolgenden wiederholten Erreichen eines dem lokalen Maximums (Fₛₙₐₚ) entsprechenden Wertes der Rückstellkraft (F) noch vor dem Erreichen der Betätigungsstellung (X_{E}) bei einer zweiten Auslenkung (X₂) definiert ist.

9. Betrieb des Eingabegeräts gemäß einem der vorhergehenden Ansprüche 6 bis 8, wobei ein zeitlicher Verlauf des Sensorsignals (Z(t)) als zwingende Voraussetzung für die weitere Analyse sich ausschließlich für die Zuordnung einer Schalt- oder Steuerfunktion qualifiziert, wenn ein vorgegebener Grenzwert (Z₁) von dem Sensorsignal (Z(t)) über- bzw. unterschritten wurde.

## Claims

1. Input device (1) having:
a touch-sensitive input surface (8) facing an operator (B) ;
a detection device (4, 6) for the locally resolved detection of an approach to and touch on the touch-sensitive input surface (8), which has a sensor array (6) extending parallel to the input surface (8) for the capacitive and/or inductive detection;
an input part (9) that is arranged on the input surface (8) and is mounted such that it can be moved along an actuating direction (B₁) extending perpendicular to the input surface (8) from a rest position (X₀) into an actuating position (X_{E}), in order to enable the operator (B) to perform an operating input by means of manually displacing the input part (9) along the actuating direction (B₁);
a position transmitter (10) fixed to the input part (9) and interacting with the detection device (4, 6) for non-contact position detection;
**characterized in that** the input device further has:
restoring means (11), in order to generate a restoring force (F) counteracting the manual displacement from the rest position (X₀) with a snap feel, in which the restoring force (F) counteracting the actuation and having to be overcome by the operator (B) first increases with increasing displacement of the input part (9) from the rest position (X₀) into the actuating position (X_{E}), then reaches a first local maximum (Fₛₙₐₚ) as a pressure point before reaching the actuating position (X_{E}), in order then to fall without going to zero, and in order then to increase again at the latest when the actuating position (X_{E}) is reached;
wherein the detection device (4, 6) is designed to acquire a time profile of an approach to the touch-sensitive input surface (8) by means of a time profile of a sensor signal (Z(t)) from the sensor array (6) and to analyse the time profile of the sensor signal (Z(t)) and/or an associated frequency spectrum, and it is further designed then to assign a switching or control function only if, during the preceding analysis, it was established that the time profile of the sensor signal (Z(t)) and/or the associated frequency spectrum has a characteristic predefined by the snap feel.

2. Input device (1) according to Claim 1, wherein the time profile of the sensor signal (Z(t)) is high-pass filtered before the analysis.

3. Input device (1) according to the preceding claim, wherein a limiting frequency (f_{gr}) of the high-pass filtering is defined by the time interval between reaching, for the first time, a first deflection (X₁) defined by the local maximum (Fₛₙₐₚ) of the restoring force (F) during the manual displacement of the input part (9) from the rest position (X₀) along the actuating direction (B₁), and subsequently repeatedly reaching a value of the restoring force (F) corresponding to the local maximum (Fₛₙₐₚ) before reaching the actuating position (X_{E}) at a second deflection (X₂).

4. Input device (1) according to one of the preceding claims, wherein, as a compulsory precondition for the further analysis, a time profile of the sensor signal (Z(t)), qualifies for the assignment of a switching or control function exclusively if the sensor signal (Z(t)) exceeded or fell below a predefined limiting value (Z₁).

5. Use of the input device (1) according to one of the preceding claims in a motor vehicle.

6. Operation of an input device, having the following steps:
providing an input device (1) having:
• a touch-sensitive input surface (8) facing an operator (B);
• a detection device (4, 6) for the locally resolved detection of an approach to and touch on the touch-sensitive input surface (8), which has a sensor array (6) extending parallel to the input surface (8) for the capacitive and/or inductive detection,
• an input part (9) that is arranged on the input surface (8) and is mounted such that it can be moved along an actuating direction (B₁) extending perpendicular to the input surface (8) from a rest position (X₀) into an actuating position (X_{E}), in order to enable the operator (B) to perform an operating input by means of manually displacing the input part (9) along the actuating direction (B₁);
• a position transmitter (10) fixed to the input part (9) and interacting with the detection device for non-contact position detection;
• restoring means (11), in order to generate a restoring force (F) counteracting the manual displacement from the rest position (X₀) with a snap feel, in which the restoring force (F) counteracting the actuation and having to be overcome by the operator (B) first increases with the increasing displacement of the input part (9) from the rest position (X₀) into the actuating position (X_{E}), then reaches a first local maximum (Fₛₙₐₚ) as a pressure point before reaching the actuating position (X_{E}), in order then to fall without going to zero, and in order then to increase again at the latest when the actuating position (X_{E}) is reached;
acquiring a time profile of an approach to the touch-sensitive input surface (8) by means of a time profile of a sensor signal (Z(t)) from the sensor array (6); analysing the time profile of the sensor signal (Z(t)) and/or an associated frequency spectrum;
assigning a switching or control function only if, during the preceding analysis, it was established that the time profile of the sensor signal (Z(t)) and/or the associated frequency spectrum has a characteristic predefined by the snap feel.

7. Operation of the input device according to the preceding claim, wherein the time profile of the sensor signal (Z(t)) is high-pass filtered before the analysis.

8. Operation of the input device according to the preceding claim, wherein a limiting frequency (f_{gr}) of the high-pass filtering is defined by the time interval between reaching, for the first time, a first deflection (X₁) defined by the local maximum (Fₛₙₐₚ) of the restoring force (F) during a manual displacement of the input part (9) from the rest position (X₀) along the actuating direction (B₁, and subsequently repeatedly reaching a value of the restoring force (F) corresponding to the local maximum (Fₛₙₐₚ) before reaching the actuating position (X_{E}) at a second deflection (X₂).

9. Operation of the input device according to one of the preceding claims 6 to 8, wherein, as a compulsory precondition for the further analysis, a time profile of the sensor signal (Z(t)), qualifies for the assignment of a switching or control function exclusively if the sensor signal (Z(t)) exceeded or fell below a predefined limiting value (Z₁).

## Revendications

1. Dispositif d'entrée (1), présentant :
une surface d'entrée tactile (8) tournée vers un utilisateur (B) ;
un équipement de détection (4, 6) pour la détection à résolution spatiale d'une approche et d'un contact avec la surface d'entrée tactile (8) qui présente un réseau de capteurs (6) s'étendant en parallèle à la surface d'entrée (8) pour la détection capacitive et/ou inductive ;
une partie d'entrée (9) disposée sur la surface d'entrée (8), montée mobile le long d'une direction d'actionnement (B₁) s'étendant perpendiculairement à la surface d'entrée (8) d'une position de repos (X₀) à une position d'actionnement (X_{E}) afin de permettre l'exécution d'une entrée d'utilisation par l'utilisateur (B) au moyen d'une translation manuelle de la partie d'entrée (9) le long de la direction d'actionnement (B₁) ;
un transmetteur de position (10) fixé à la partie d'entrée (9) et coopérant avec l'équipement de détection (4, 6) pour la détection de position sans contact ;
**caractérisé en ce que** le dispositif d'entrée présente en outre :
des moyens de rappel (11) pour produire une force de rappel (F) à sensation d'encliquetage, opposée à la translation manuelle à partir de la position de repos (X₀), à laquelle la force de rappel (F) opposée à l'actionnement et à surmonter par l'utilisateur (B) n'augmente avec une translation progressive de la partie d'entrée (9) de la position de repos (X₀) à la position d'actionnement (X_{E}) que lorsqu'un premier maximum local (Fₛₙₐₚ) est atteint comme point de poussée avant que la position d'actionnement (X_{E}) ne soit atteinte afin de descendre ensuite sans passer à zéro, et afin d'augmenter à nouveau au plus tard lorsque la position d'actionnement (X_{E}) est atteinte ;
dans lequel l'équipement de détection (4, 6) est conçu pour détecter une évolution dans le temps d'une approche de la surface d'entrée tactile (8) au moyen d'une évolution dans le temps d'un signal de capteur (Z(t)) du réseau de capteurs (6), et pour analyser l'évolution dans le temps du signal de capteur (Z(t)) et/ou un spectre de fréquence associé, et est en outre conçu pour associer une fonction de commutation ou de commande exclusivement s'il a été constaté lors de l'analyse précédente que l'évolution dans le temps du signal de capteur (Z(t)) et/ou le spectre de fréquence associé présentent une caractéristique prédéfinie par la sensation d'encliquetage.

2. Dispositif d'entrée (1) selon la revendication 1, dans lequel l'évolution dans le temps du signal de capteur (Z(t)) est filtrée en passe-haut avant l'analyse.

3. Dispositif d'entrée (1) selon la revendication précédente, dans lequel une fréquence limite (f_{gr}) du filtrage passe-haut est définie par l'intervalle de temps entre la première fois qu'une première excursion (X₁), définie par le maximum local (Fₛₙₐₚ) de la force de rappel (F), est atteinte lors de la translation manuelle de la partie d'entrée (9) à partir de la position de repos (X₀) le long de la direction d'actionnement (B₁) et les fois suivantes répétées où une valeur de la force de rappel (F), correspondant au maximum local (Fₛₙₐₚ), est atteinte avant même que la position d'actionnement (X_{E}) ne soit atteinte lors d'une deuxième excursion (X₂).

4. Dispositif d'entrée (1) selon l'une quelconque des revendications précédentes, dans lequel une évolution dans le temps du signal de capteur (Z(t)) est qualifiée comme une condition indispensable à la suite de l'analyse exclusivement pour l'association d'une fonction de commutation ou de commande si une valeur limite prédéfinie (Z₁) a été dépassée ou soupassée par le signal de capteur (Z(t)).

5. Utilisation du dispositif d'entrée (1) selon l'une quelconque des revendications précédentes dans un véhicule automobile.

6. Fonctionnement d'un dispositif d'entrée comprenant les étapes suivantes consistant à :
fournir un dispositif d'entrée (1) présentant :
• une surface d'entrée tactile (8) tournée vers un utilisateur (B) ;
• un équipement de détection (4, 6) pour la détection à résolution spatiale d'une approche et d'un contact avec la surface d'entrée tactile (8) qui présente un réseau de capteurs (6) s'étendant en parallèle à la surface d'entrée (8) pour la détection capacitive et/ou inductive ;
• une partie d'entrée (9) disposée sur la surface d'entrée (8), montée mobile le long d'une direction d'actionnement (B₁) s'étendant perpendiculairement à la surface d'entrée (8) d'une position de repos (X₀) à une position d'actionnement (X_{E}) afin de permettre l'exécution d'une entrée d'utilisation par l'utilisateur (B) au moyen d'une translation manuelle de la partie d'entrée (9) le long de la direction d'actionnement (B₁) ;
• un transmetteur de position (10) fixé à la partie d'entrée (9) et coopérant avec l'équipement de détection pour la détection de position sans contact ;
• des moyens de rappel (11) pour produire une force de rappel (F) à sensation d'encliquetage, opposée à la translation manuelle à partir de la position de repos (X₀), à laquelle la force de rappel (F) opposée à l'actionnement et à surmonter par l'utilisateur (B) n'augmente avec une translation progressive de la partie d'entrée (9) de la position de repos (X₀) à la position d'actionnement (X_{E}) que lorsqu'un premier maximum local (Fₛₙₐₚ) est atteint comme point de poussée avant que la position d'actionnement (X_{E}) ne soit atteinte afin de descendre ensuite sans passer à zéro, et afin d'augmenter à nouveau au plus tard lorsque la position d'actionnement (X_{E}) est atteinte ;
détecter une évolution dans le temps d'une approche de la surface d'entrée tactile (8) au moyen d'une évolution dans le temps d'un signal de capteur (Z(t)) du réseau de capteurs (6) ;
analyser l'évolution dans le temps du signal de capteur (Z(t)) et/ou un spectre de fréquence associé ;
associer exclusivement une fonction de commutation ou de commande s'il a été constaté à l'étape d'analyse que l'évolution dans le temps du signal de capteur (Z(t)) et/ou le spectre de fréquence associé présentent une caractéristique prédéfinie par la sensation d'encliquetage.

7. Fonctionnement du dispositif d'entrée selon la revendication précédente, dans lequel l'évolution dans le temps du signal de capteur (Z(t)) est filtrée en passe-haut avant l'analyse.

8. Fonctionnement du dispositif d'entrée selon la revendication précédente, dans lequel une fréquence limite (f_{gr}) du filtrage passe-haut est définie par l'intervalle de temps entre la première fois qu'une première excursion (X₁), définie par le maximum local (Fₛₙₐₚ) de la force de rappel (F), est atteinte lors d'une translation manuelle de la partie d'entrée (9) à partir de la position de repos (X₀) le long de la direction d'actionnement (B₁) et les fois suivantes répétées où une valeur de la force de rappel (F), correspondant au maximum local (Fₛₙₐₚ), est atteinte avant même que la position d'actionnement (X_{E}) ne soit atteinte lors d'une deuxième excursion (X₂).

9. Fonctionnement du dispositif d'entrée selon l'une quelconque des revendications précédentes 6 à 8, dans lequel une évolution dans le temps du signal de capteur (Z(t)) est qualifiée comme une condition indispensable à la suite de l'analyse exclusivement pour l'association d'une fonction de commutation ou de commande si une valeur limite prédéfinie (Z₁) a été dépassée ou soupassée par le signal de capteur (Z(t)).
